# EUROPEAN PATENT APPLICATION

(11) **EP 4 604 301 A1**
(43) Date of publication of application: **20.08.2025**
(21) Application number: 22969855.0
(22) Date of filing: 30.12.2022
(51) Int. Cl.: H01M 50/471

(54) **PROTECTIVE PLATE FOR BATTERY CELL, BATTERY CELL, BATTERY, AND ELECTRIC DEVICE**

(71) Applicant: Contemporary Amperex Technology (Hong Kong) Limited, Central, Hong Kong (HK)
(72) Inventor: YANG, Kaihuan, Ningde City, Fujian 352100 (CN); CHENG, Qi, Ningde City, Fujian 352100 (CN); SU, Huasheng, Ningde City, Fujian 352100 (CN); MEI, Xiang, Ningde City, Fujian 352100 (CN); LI, Quankun, Ningde City, Fujian 352100 (CN)
(74) Representative: Gong, Jinping
(86) International application number: PCT/CN2022/144246
(87) International publication number: WO 2024/138713

(57) **Abstract**

The present application provides a protective plate for a battery cell, a battery cell, a battery, and an electricity consuming apparatus. The protective plate is provided with a heat absorbing structure, and at least a portion of the heat absorbing structure is configured to be fused and connected with an insulating film of the battery cell for covering an electrode assembly. The embodiments of the present application provide a heat absorbing structure on the protective plate, so as to allow a stronger connection strength between the protective plate and the insulation film during the preparation of the battery cell, which reduces the probability of detachment between the protective plate and the insulation film, increases the probability of installing the protective plate together with the electrode assembly into the shell, and helps to improve the production yield rate of the battery cell.

## Description

### TECHNICAL FIELD

The present application relates to the field of battery technology, and in particular to a protective plate for a battery cell, a battery cell, a battery, and an electricity consuming apparatus.

### BACKGROUND

Battery cells are widely used in electronic devices, such as mobile phones, laptops, electric cars, electric vehicles, electric airplanes, electric ships, electric toy cars, electric toy ships, electric toy planes, and electric tools. Battery cells can include cadmium nickel battery cells, hydrogen nickel battery cells, lithium-ion battery cells, and secondary alkaline zinc manganese battery cells, etc.

In the development of the battery technology, how to improve the production yield of the battery cell is a technical problem that needs to be solved urgently in the battery technology.

### SUMMARY

In view of the above issue, the present application provides a protective plate for a battery cell, a battery cell, a battery, and an electricity consuming apparatus, which can improve the yield rate of the battery cell.

In a first aspect, embodiments of the present application provide a protective plate for a battery cell, which is provided with a heat absorbing structure. At least a portion of the heat absorbing structure is configured to be fused and connected with an insulation film of the battery cell for covering the electrode assembly.

In the above solutions, by providing a heat absorbing structure on the protective plate, the connection strength between the protective plate and the insulation film is stronger in the preparation process of the battery cell, thereby reducing the probability of detachment between the protective plate and the insulation film, and increasing the probability of installing the protective plate together with the electrode assembly into the shell, which helps to improve the production yield rate of the battery cell.

In some embodiments, the protective plate includes a plate body and a heat absorbing structure connected to the plate body.

In the above solutions, the plate body is the main part of the protective plate that protects the electrode assembly, and the heat absorbing structure is provided on the plate body. The existence of the heat absorbing structure can reduce the risk of separation between the plate body and the insulation film, improve the reliability of the relative position between the plate body and the electrode assembly, and thus enable the plate body to better protect the electrode assembly.

In some embodiments, the heat absorbing structure is provided on at least a side of the plate body along its own thickness direction.

In the above solutions, by providing the heat absorbing structure on at least a side of the plate body in its own thickness direction, the reliability of the connection between the protective plate and the insulation film can be improved, the probability of the protective plate and the electrode assembly separating from each other and thus unable to enter the shell simultaneously can be reduced, and the production yield of the battery cell can be improved.

In some embodiments, the plate body includes a first surface and a second surface opposite to each other along the thickness direction, the plate body is provided with a recess portion recessed relative to the first surface, and the heat absorbing structure is at least partially accommodated within the recess portion.

In the above solutions, by providing the recess portion on the plate body, the heat absorbing structure can be at least partially located within the recess portion of the plate body. This design can reduce the protrusion height of the heat absorbing structure relative to the plate body, reduce the possibility of unevenness on the surface of the protective plate due to the existence of the heat absorbing structure, improve the surface flatness of the protective plate, and help to improve the bonding effect between the protective plate and the insulation film or between the protective plate and the shell.

In some embodiments, the surface of the heat absorbing structure away from the bottom surface of the recess portion is flush with the first surface.

In the above solutions, the surface flatness of the protective plate is further improved, which helps to improve the bonding effect between the protective plate and the shell or between the protective plate and the insulation film, thereby improving the reliability of the relative position between the protective plate and the electrode assembly, and enabling the protective plate to better protect the electrode assembly.

In some embodiments, two surfaces of the heat absorbing structure in the thickness direction are exposed relative to the plate body.

In the above solutions, by exposing two surfaces of the heat absorbing structure in the thickness direction, the reliability of the connection between the protective plate and the insulation film is improved, further reducing the risk of the protective plate not being installed together with the electrode assembly into the shell, and improving the yield rate of the battery cell.

In some embodiments, the plate body is provided with a through hole that penetrates through along the thickness direction, and the heat absorbing structure is at least partially accommodated within the through hole.

In the above solutions, by providing a through hole on the plate body and embedding the heat absorbing structure in the through hole, two surfaces of the heat absorbing structure in the thickness direction can be exposed. The structure is simple and reliable, which is conducive to improving the reliability of the connection between the protective plate and the insulation film, and improving the yield rate of the battery cell.

In some embodiments, the number of the heat absorbing structure is multiple, and multiple heat absorbing structures are distributed at intervals on the plate body.

In the above solutions, multiple heat absorbing structures are distributed at intervals on the plate body, so that the protective plate is provided with the heat absorbing structures at different positions. Therefore, when the protective plate is fused and connected with the insulation film, the connection strength between the protective plate and the insulation film at different positions can be improved, ensuring that the protective plate can enter the shell simultaneously with the electrode assembly, and improving the preparation yield of the battery cell.

In some embodiments, the heat absorbing structure surrounds to form a circular structure.

In the above solutions, for the heating path of the heating source on the protective plate, the heat absorbing structure is provided as a circular structure, so that the heating position of the heating source on the protective plate can accurately fall on the heat absorbing structure, which is conducive to absorbing more heat by the heat absorbing structure, thereby improving the connection strength between the protective plate and the insulation film, and improving the preparation yield of the battery cell.

In some embodiments, the heat absorbing structure is symmetrically distributed relative to the central axis of the plate body.

In the above scheme, by symmetrically distributing the heat absorbing structure relative to the central axis, the heat can be evenly diffused to different positions of the protective plate when the protective plate is fused and connected with the insulation film, thereby improving the connection strength between the protective plate and the insulation film at different edge positions of the protective plate, and improving the preparation yield of the battery cell.

In some embodiments, the color of the heat absorbing structure is different from the color of the plate body.

In the above solutions, the heat absorption rate of the heat absorbing structure is not only affected by material factors, but also by its own surface color. In view of this, embodiments of the present application adjust the color of the heat absorbing structure to make the material of the heat absorbing structure different from the material of the plate body, which helps to absorb more heat when the protective plate is fused and connected with the insulation film, thereby improving the connection strength between the protective plate and the insulation film.

In some embodiments, the color of the heat absorbing structure is darker than the color of the plate body.

In the above solutions, the color of the heat absorbing structure is set to be darker than the color of the plate body, so as to help the heat absorbing structure to absorb more heat when the protective plate is fused and connected with the insulation film, thereby improving the connection strength between the protective plate and the insulation film and reducing the possibility of separation between the protective plate and the insulation film. At the same time, the existence of the heat absorbing structure can further play a certain identification role. For example, if the protective plate detaches from the insulation film, due to the dark color of the heat absorbing structure itself, the human eyes can easily observe the separation of the protective plate from the insulation film through the heat absorbing structure, which plays a certain role of reminder.

In some embodiments, the color of the heat absorbing structure includes at least one of yellow, blue, or blue.

In the above solutions, compared to other colors, the color such as yellow is more vibrant, has stronger heat absorption ability, and is more easily observed by the human eyes or certain instruments. In view of this, in the preparation process of the battery cell, certain instruments can detect the heat absorbing structure, so that whether the protective plate is installed together with the electrode assembly in the shell can be more accurately determined, thereby helping to improve the production yield of the battery cell.

In some embodiments, the light absorbance of the heat absorbing structure is greater than that of the plate body.

In the above solutions, by adjusting the material or color parameter of the heat absorbing structure, the light absorption rate of the heat absorbing structure is greater than that of the plate body, which helps to improve the heat absorption ability of the heat absorbing structure, thereby improving the connection strength between the protective plate and the insulation film, and improving the production yield of the battery cell.

In some embodiments, the heat absorbing structure includes at least one of polypropylene, acrylonitrile butadiene styrene, polycarbonate, polystyrene, polyurethane, calcium carbonate, or silica.

In a second aspect, embodiments of the present application provide a battery cell including a shell, an electrode assembly, an insulating film, and the protective plate in any of the aforementioned embodiments. The electrode assembly is accommodated within the shell, the insulating film covers at least a portion of the electrode assembly, and the protective plate is connected to the insulating film.

In some embodiments, the protective plate is provided on a side of the insulation film away from the electrode assembly.

In the above solutions, the protective plate is provided on the side of the insulation film away from the electrode assembly, so that the insulation film can have an insulation effect on the electrode assembly. At the same time, the protective plate can reduce the risk of contact and collision between the electrode assembly and the shell, which is conducive to improving the safety of the use of the battery cell.

In some embodiments, the protective plate includes a plate body, and the heat absorbing structure is provided on a side of the plate body away from the insulation film.

In the above solutions, the heat absorbing structure is provided on the side of the plate body away from the insulation film, so that the heat absorbing structure can be closer to the heating source, which helps the heat absorbing structure to absorb more heat so as to achieve the connection between the protective plate and the insulation film better, ensure the strength of the connection between the protective plate and the insulation film, reduce the risk of the protective plate detaching from the electrode assembly, and improve the safety of the use of the battery cell.

In a third aspect, embodiments of the present application provide a battery including the battery cell of any of the aforementioned embodiments.

In a fourth aspect, embodiments of the present application provide an electricity consuming apparatus including the battery cell for providing electrical energy in any of the aforementioned embodiments.

The above description is only a summary of the technical solutions of the present application. In order to understand the technical means in the present application more clearly, it can be implemented in accordance with the content of the specification; and in order to make the above and other objectives, features and advantages of the present application more obvious and easier to understand, and the specific embodiments of the present application are cited below.

### BRIEF DESCRIPTION OF THE DRAWINGS

In order to provide a clearer explanation of the technical solution of embodiments of the present application, a brief introduction will be given below to the accompanying drawings required for use in the embodiments of the present application. It is evident that the accompanying drawings are only some embodiments of the present application. For those skilled in the art, other accompanying drawings can be obtained based on the drawings without creative effort.
Fig. 1 is a structural schematic diagram of a vehicle provided in an embodiment of the present application;
Fig. 2 is a schematic diagram of the exploded structure of a battery provided in an embodiment of the present application;
Fig. 3 is a schematic diagram of the exploded structure of a battery module provided in an embodiment of the present application;
Fig. 4 is a schematic diagram of the exploded structure of a battery cell provided in an embodiment of the present application;
Fig. 5 is a structural schematic diagram of a protective plate provided in an embodiment of the present application;
Fig. 6 is a schematic diagram of the sectional structure at A-A in Fig. 5;
Fig. 7 is a schematic diagram of the sectional structure of another protective plate provided in an embodiment of the present application;
Fig. 8 is a schematic diagram of the sectional structure of further another protective plate provided in an embodiment of the present application;
Fig. 9 is a schematic diagram of the sectional structure of still another protective plate provided in an embodiment of the present application;
Fig. 10 is a schematic diagram of the top view structure of another protective plate provided in an embodiment of the present application;
Fig. 11 is a schematic diagram of the top view structure of further another protective plate provided in an embodiment of the present application;
Fig. 12 is a schematic diagram of the top view structure of still another protective plate provided in an embodiment of the present application;
Fig. 13 is a schematic diagram of the top view structure of yet another protective plate provided in an embodiment of the present application.

In the Figures:
1000. Vehicle;
100. Battery; 200. Controller; 300. Motor; 400. Case; 41. First case portion; 42. Second case portion; 43. Accommodating portion; 500. Battery module;
10. Battery cell; 11. Shell; 111. Shell body; 112. End cover; 12. Electrode assembly; 13. Insulation film; 14. Electrode terminal; 15. Current collector;
20. Protective plate; 21. Heat absorbing structure; 22. Plate body;
M1. First surface; M2. Second surface;
T. Through hole;
L. Central axis;
A. Recess portion;
Z. Thickness direction.

### DETAILED DESCRIPTION

The embodiments of the technical solutions of the present application will be described in detail below with reference to the accompanying drawings. The following embodiments are only used to illustrate the technical solutions of the present application more clearly, and therefore are only examples and cannot be used to limit the protection scope of the present application.

Unless otherwise defined, all technical and scientific terms used in the text have the same meanings as those commonly understood by the skilled person in the technical field which the present application belongs to. The terms used in the text are only for the purpose of describing specific embodiments and are not intended to limit the present application. The terms "including" and "having" in the description, the claims, the description of the above accompanying drawings of the present application, and any variations thereof, are intended to cover non-exclusive inclusion.

In the description of the embodiments of the present application, the technical terms "first", "second", etc. are only to distinguish different objects, and cannot be understood as indicating or implying the relative importance or implicitly indicating the quantity, the specific order, or the primary and secondary relationship of technical features indicated. In the description of the embodiments of the present application, the meaning of "a plurality of" is two or more, unless otherwise specifically defined.

Referring to "embodiments" in the text means that specific features, structures, or characteristics described in conjunction with the embodiments may be included in at least one embodiment of the present application. The phrase appearing in various positions in the specification does not necessarily refer to the same embodiment, nor is it an independent or alternative embodiment that is mutually exclusive with other embodiments. The skilled person the art explicitly and implicitly understand that the embodiments described in the text can be combined with other embodiments.

In the description of the embodiments of the present application, the term "and/or" is only a description of the association relationship of the associated object, indicating that there can be three types of relationships, such as A and/or B which can indicate the presence of A alone, the presence of A and B simultaneously, and the presence of B alone. In addition, the character "/" in the present text generally indicates that the associated objects are an "or" relationship.

In the description of the embodiments of the present application, the terms "multiple", "a plurality of" refer to two or more (including two). For the same reason, "multiple groups", "a plurality of groups" refer to two or more groups (including two groups), and "multiple pieces", "a plurality of pieces" refer to two or more pieces (including two pieces).

In the description of the embodiments of the present application, an orientation or positional relationship indicated by the technical terms "center", "longitudinal", "transverse", "length", "width", "thickness", "upper", "lower", "front", "back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for the convenience of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "mounted", "connected with", "connection", "fixed", etc. should be understood in a broad sense. For example, the "connection" may be fixed connection, detachable connection, integrated connection, mechanical connection, electrical connection, direct connection, indirect connection via an intermediate medium, internal communication between two elements, or interaction between two elements. The skilled person in the art may appreciate the specific meanings of the foregoing terms in the embodiments of the present application according to specific circumstances.

In the embodiments of the present application, the battery cell can be a secondary battery, which refers to a battery cell that can continue to be used by activating its active materials through charging after the battery cell is discharged.

The battery cells can be lithium-ion batteries, sodium ion batteries, sodium lithium ion batteries, lithium metal batteries, sodium metal batteries, lithium sulfur batteries, magnesium ion batteries, nickel hydrogen batteries, nickel cadmium batteries, lead-acid batteries, etc., which are not limited by the embodiments of the present application.

The battery cell generally includes an electrode assembly. The electrode assembly includes a positive electrode, a negative electrode, and a separator. During the charging and discharging of the battery cell, active ions (such as lithium ions) are embedded and detached back and forth between the positive electrode and the negative electrode. The separator is provided between the positive electrode and the negative electrode, which can prevent short circuit between the positive electrode and the negative electrode and meanwhile allow active ions to pass through.

In some embodiments, the positive electrode can be a positive electrode plate, which may include a positive electrode current collector and a positive electrode active material provided on at least one surface of the positive electrode current collector.

As an example, the positive electrode current collector has two surfaces opposite to each other in its own thickness direction, and the positive electrode active material is provided on either or both of the two opposite surfaces of the positive electrode current collector.

As an example, the positive current collector can use a metal foil or a composite current collector. For example, as a metal foil, silver surface treated aluminum or stainless steel, stainless steel, copper, aluminum, nickel, carbon precision electrodes, carbon, nickel, or titanium can be used. The composite current collector can include a polymer material base layer and a metal layer. The composite current collector can be formed by providing the metal material (aluminum, aluminum alloy, nickel, nickel alloy, titanium, titanium alloy, silver and silver alloy, etc.) onto polymer substrate (such as polypropylene, polyethylene terephthalate, polyethylene terephthalate, polystyrene and polyethylene).

As an example, the positive electrode active material may include at least one of the following materials: lithium phosphate, lithium transition metal oxide, and the respective modified compounds, which is not limited by the present application. Other traditional materials that can be used as positive electrode active materials for the battery can also be used. These positive electrode active materials can be used alone or in combination in two or more. Among them, the example of the lithium phosphate may include, but are not limited to, at least one of lithium iron phosphate (such as LiFePO4 (also referred to as LFP), composite materials of lithium iron phosphate and carbon, lithium manganese phosphate (such as LiMnPO4), composite materials of lithium manganese phosphate and carbon, lithium manganese iron phosphate, or composite materials of lithium manganese iron phosphate and carbon.

In some embodiments, the negative electrode may be a negative electrode plate, which may include a negative current collector.

As an example, the negative current collector can be a metal foil, a foam metal or composite current collector. For example, as a metal foil, silver surface treated aluminum or stainless steel, stainless steel, copper, aluminum, nickel, carbon precision electrode, carbon, nickel, or titanium can be used. The foam metal can be foam nickel, foam copper, foam aluminum, foam alloy, or foam carbon. The composite current collector can include a polymer material base layer and a metal layer. The composite current collector can be formed by providing a metal material (copper, copper alloy, nickel, nickel alloy, titanium, titanium alloy, silver and silver alloy, etc.) on a polymer substrate (such as polypropylene, polyethylene terephthalate, polyethylene terephthalate, polystyrene and polyethylene).

As an example, the negative electrode plate may include a negative electrode current collector and a negative electrode active material provided on at least one surface of the negative electrode current collector.

As an example, the negative electrode current collector has two surfaces opposite to each other in its own thickness direction, and the negative electrode active material is provided on either or both of the two opposite surfaces of the negative electrode current collector.

As an example, the negative electrode active material can be a negative electrode active material commonly known in the art for the battery cell. As an example, the negative electrode active material may include at least one of the following materials: artificial graphite, natural graphite, soft carbon, hard carbon, silicon-based materials, tin based materials, and lithium titanate.

In some embodiments, the positive electrode current collector material may be aluminum, and the negative electrode current collector material may be copper.

In some embodiments, the electrode assembly further includes a separator which is provided between the positive electrode and the negative electrode.

In some embodiments, the separator is an isolation film. The type of the isolation film is not limited specifically in the present application, and any well-known porous structure of the isolation film with good chemical and mechanical stability can be selected.

As an example, the main material of the isolation film can be selected from at least one of glass fiber, non-woven fabric, polyethylene, polypropylene, polyvinylidene fluoride or ceramics.

In some embodiments, the separator is a solid electrolyte. The solid electrolyte is provided between the positive electrode and the negative electrode, functioning to transport ions and separate the positive electrode from the negative electrode at the same time.

In some embodiments, the battery cell further includes an electrolyte, which plays a role of conducting ions between the positive electrode and the negative electrode. The present application does not have specific restrictions on the type of the electrolyte, which can be selected according to needs. The electrolyte can be liquid, gel phase or solid.

In some embodiments, the electrode assembly is a wound structure. The positive and negative electrodes are wound to form a winding structure.

In some embodiments, the electrode assembly is a laminated structure.

In some embodiments, the shape of the electrode assembly may be cylindrical, flat, or multi prismatic, etc.

In some embodiments, the electrode assembly is provided with an electrode tab, which can lead the current out of the electrode assembly. The electrode tab includes a positive electrode tab and a negative electrode tab.

In some embodiments, the battery cell may include a shell for encapsulating the components such as the electrode assembly and the electrolyte. The shell can be a steel shell, an aluminum shell, a plastic shell (such as polypropylene), a composite metal shell (such as a copper aluminum composite shell), or an aluminum-plastic film, etc.

As an example, the battery cell can be a cylindrical battery cell, a prismatic battery cell, a soft pack battery cell, or other shaped battery cells. The prismatic cell includes a square shell battery cell, a blade shaped battery cell and a multi prismatic battery cell such as a hexagonal prismatic cell, etc., which is not limited specifically in the present application.

The battery mentioned in the embodiments of the present application refers to a single physical module including one or more battery cells to provide higher voltage and capacity.

In some embodiments, the battery can be a battery module. When there are multiple battery cells, multiple battery cells are arranged and fixed to form one battery module.

In some embodiments, the battery can be a battery pack which includes a case and a battery cell, and the battery cell or battery module is accommodated in the case.

In some embodiments, the case can serve as a part of the vehicle's chassis structure. For example, a part of the case can become at least a part of the vehicle's floor, or a part of the case can become at least a part of the vehicle's crossbeam and longitudinal beam.

In some embodiments, the battery may be an energy storage device which include energy storage containers, energy storage electrical cabinets, etc.

The inventors noticed that after the completion of fabricating the battery cell, the electrode assembly is prone to damage due to collision and other reasons, resulting in a decrease in the yield rate of the battery cell and causing potential safety hazards easily. The inventors researched and found that generally, a protective plate is placed inside the battery cell for protecting the electrode assembly; however, during the preparing of the battery cell, the protective plate is prone to detach from the electrode assembly, resulting in the absence of the protective plate in the produced battery cell; the electrode assembly is prone to interference with the shell and other structures, thus leading to damage and affecting the yield of the battery cell.

In view of the above technical issue, the present application provides a protective plate for a battery cell, a battery cell, a battery, and an electricity consuming apparatus. By providing a heat absorbing structure on the protective plate, the reliability of the fusion connection between the protective plate and the insulation film is improved, the risk of detachment between the protective plate and the insulation film is reduced, and the reliability of the relative position between the protective plate and the electrode assembly is improved.

The technical solution described in the embodiments of the present application is applicable to the battery and the electricity consuming apparatus using the battery, such as a mobile phone, a portable device, a laptop, an electric car, an electric vehicle, a ship, a spacecraft, an electric toy, and an electric tool. Among them, the spacecraft is for example an airplane, a rocket, a space shuttle, and a spaceship, and the electric toy includes for example a fixed or mobile electric toy, specifically for example, a game console, an electric car toy, an electric boat toy, and an electric airplane toy. The electric tool includes for example a metal cutting electric tool, a grinding electric tool, an assembly electric tool, and a railway electric tool, specifically for example, an electric drill, an electric grinder, an electric wrench, an electric screwdriver, an electric hammer, an impact drill, a concrete vibrator and an electric planer.

The battery cell described in the embodiments of the present application is not limited to the electricity consuming apparatus described above, but for the sake of simplicity, the following embodiments are all illustrated using an electric vehicle as an example.

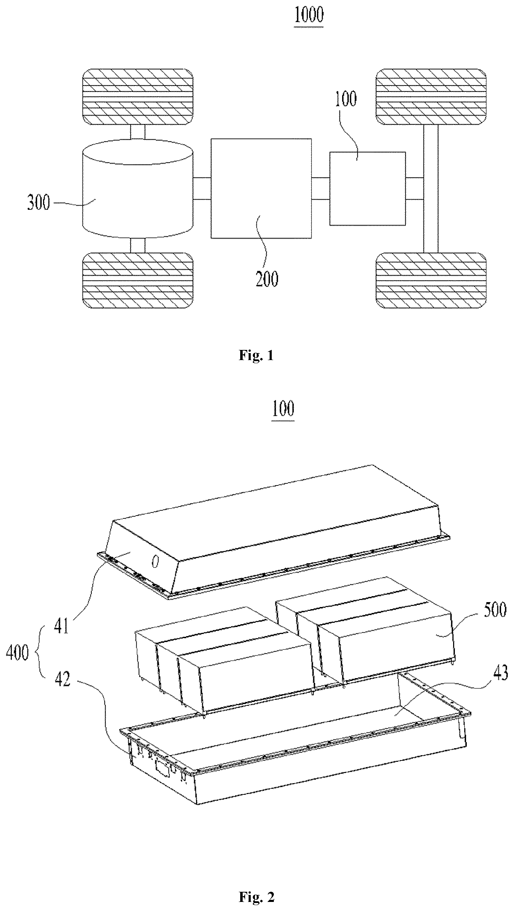

Please refer to Figure 1, which is a simple schematic diagram of a vehicle 1000 provided in an embodiment of the present application. The vehicle 1000 can be a fuel powered vehicle, gas powered vehicle, or new energy vehicle which can be a pure electric vehicle, hybrid electric vehicle, or extended range vehicle, etc. The interior of the vehicle 1000 can be provided with a battery 100. Specifically for example, the battery 100 can be provided in the bottom, the front, or the rear of the vehicle 1000. The battery 100 can be configured to provide power for the vehicle 1000. For example, the battery 100 can serve as the operating power source for the vehicle 1000. The vehicle 1000 may further include a controller 200 and a motor 300. For example, the controller 200 is used to control the battery to supply power to the motor 300. The battery can be configured for starting, navigation, etc. of the vehicle 1000. Of course, the battery 100 can also be used to drive the vehicle 1000, replacing or partially replacing fuel or natural gas to provide power for the vehicle 1000.

Fig. 2 is an exploded schematic diagram of the battery provided in some embodiments of the present application. As shown in Fig. 2, the battery 100 includes a case 400 and a battery cell (not shown in the figure), and the battery cell is accommodated inside the case 400.

The case 400 is configured to accommodate the battery cell, and can be of various structures. In some embodiments, the case 400 may include a first case portion 41 and a second case portion 42. The first case portion 41 and the second case portion 42 cover each other, and the first case portion 41 and the second case portion 42 jointly define an accommodating portion 43 for accommodating the battery cell. The second case portion 42 can be a hollow structure with one end open, the first case portion 41 is a plate-like structure, and the first case portion 41 fits on the opening side of the second case portion 42 to form a case with an accommodating portion 43. The first case portion 41 and the second case portion 42 can also be hollow structures with one side opening. The opening side of the first case portion 41 fits on the opening side of the second case portion 42 to form a case 400 with an accommodating portion 43. Of course, the first case portion 41 and the second case portion 42 can be of various shapes, such as cylinder and cuboid.

In the battery 100, the battery cell can be one or multiple. If there are multiple battery cells, multiple battery cells can be connected in series, parallel, or hybrid. Hybrid connection refers to both series and parallel connections among multiple battery cells. Multiple battery cells can be directly connected in series, parallel, or hybrid together, and then the whole composed of multiple battery cells can be accommodated in the case 400. Of course, multiple battery cells can be first connected in series, parallel, or hybrid to form a battery module 500. Multiple battery modules 500 can then be connected in series, parallel, or hybrid to form a whole and accommodated in the case 400.

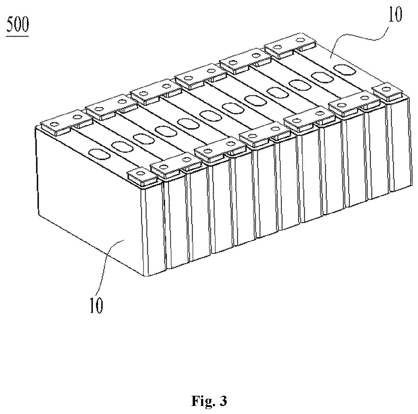

Fig. 3 is an exploded schematic diagram of the battery module 500 shown in Fig. 2.

In some embodiments, as shown in Fig. 3, there are multiple battery cells 10. The multiple battery cells 10 are first connected in series, parallel, or hybrid to form a battery module 500. Multiple battery modules 500 are connected in series, parallel, or hybrid to form a whole and accommodated inside the case.

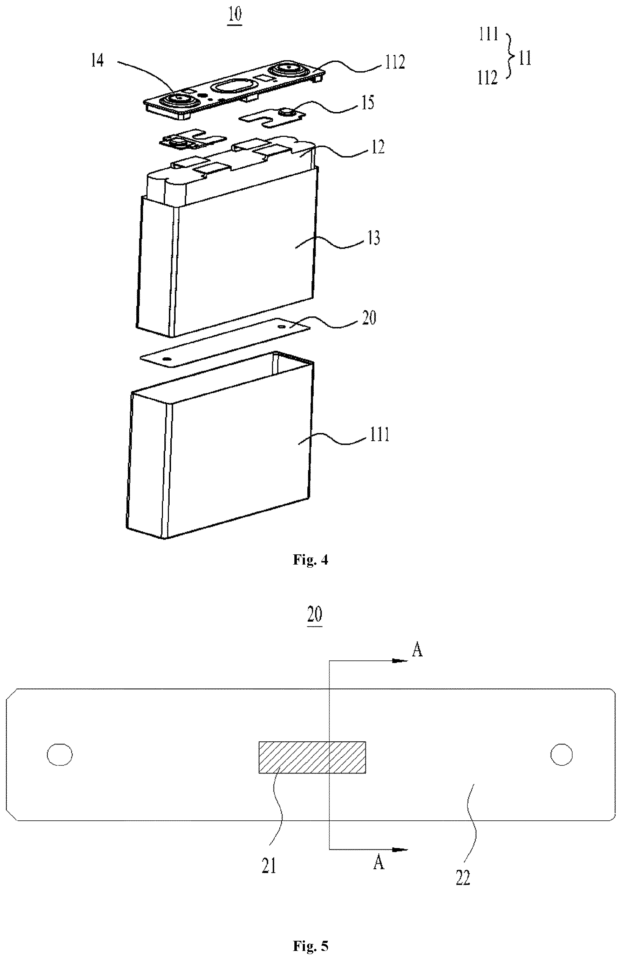

Fig. 4 is an exploded schematic diagram of the battery cell 10 shown in Fig. 3.

The battery cell 10 includes a shell 11, an electrolyte (not shown in the figure), an electrode assembly 12, an insulating film 13, and a protective plate 20. The insulating film 13 covers at least a portion of the structure of the electrode assembly 12, and the protective plate 20 is connected to the insulating film 13. The electrolyte, the insulating film 13, the electrode assembly 12, and the protective plate 20 are collectively accommodated within the shell 11.

The electrode assembly 12 is the core component of the battery cell 10 to achieve charging and discharging functions, which includes a positive electrode plate, a negative electrode plate, and a separator. The polarity of the positive electrode plate is opposite to that of the negative electrode plate, and the separator is used to insulate and isolate the positive electrode plate from the negative electrode plate. The electrode assembly 12 mainly relies on the movement of metal ions between the positive electrode plate and the negative electrode plate for operation.

The shell 11 is a hollow structure and an accommodating cavity is formed inside the shell to accommodate the electrode assembly 12 and the electrolyte. The shell 11 can be in various shapes, such as cylinder and cuboid. The shape of shell 11 can be determined based on the specific shape of the electrode assembly 12. For example, if the electrode assembly 12 is a cylindrical structure, a cylindrical shell 11 can be selected; if the electrode assembly 12 is a cuboid structure, a cuboid shell 11 can be selected.

In some embodiments, the shell 11 includes a shell body 111 and an end cover 112.

The end cover 112 is sealedly connected to the shell body 111 to form a sealing space for accommodating the electrode assembly 12 and the electrolyte. In some examples, one end of the shell body 111 has an opening, and the end cover 112 is provided in one and fits on the opening of the shell body 111. In other examples, the opposite two ends of the shell body 111 both have openings, and the end covers 112 are provided in two, and fit on the two openings of the shell body 111 respectively.

Unlimitedly, the shape of the end cover 112 can be adapted to the shape of the shell body 111 to engage with the shell body 111. Optionally, the end cover 112 can be made of a material with a certain hardness and strength (such as aluminum alloy), so that it is less prone to deformation when subjected to compression and collision, allowing the battery cell 10 to have higher structural strength and improved safety performance.

The shell body 111 can be of various shapes and sizes, such as cuboid, cylindrical, and hexagonal. Specifically, the shape of the shell body 111 can be determined based on the specific shape and size of the electrode assembly 12. The material of the shell body 111 can be various, such as copper, iron, aluminum, stainless steel and aluminum alloy, which is not limited specifically by some embodiments of the present application.

In some embodiments, functional components such as the electrode terminal 14 may be provided on the end cover 112. The electrode terminal 14 can be configured for electrical connection with the electrode assembly 12 to output or input electrical energy from or to the battery cell 10.

In some embodiments, the battery cell 10 further includes a current collector 15 for achieving electrical connection between the electrode assembly 12 and the electrode terminal 14, in order to input or output electrical energy.

The insulating film 13 covers at least a portion of the structure of the electrode assembly 12, and is made of insulating material for insulating and isolating the electrode assembly 12 from the shell 11. The insulation film 13 can be of various shapes and sizes, and its shape can be adapted to the shape of the electrode assembly 12. For example, if the electrode assembly 12 is a cylindrical structure, the insulation film 13 can also be cylindrical; if the electrode assembly 12 is a cuboid structure, the insulation film 13 can also be cuboid in shape.

Next, a detailed description of the protective plate 20 of the battery cell 10 provided in the embodiments of the present application will be provided in conjunction with the accompanying drawings. Please refer to Figs. 4 and 5. The protective plate 20 is provided with an heat absorbing structure 21, and at least a portion of the heat absorbing structure 21 is configured to be fused and connected with the insulating film 13 of the battery cell 10 for covering the electrode assembly 12.

The protective plate 20 mainly serves to protect the electrode assembly 12, reducing the risk of interference between the electrode assembly 12 and the shell 11, reducing the probability of damage to the electrode assembly 12, and thereby improving the yield and safety of the battery cell 10.

The protective plate 20 can be a plate-like structure, and can be provided corresponding to one or more surfaces of the electrode assembly 12. For example, the electrode assembly 12 includes a bottom surface and a plurality of side surfaces surrounding on the outer periphery of the bottom surface. The protective plate 20 can be correspondingly provided at the bottom surface of the electrode assembly 12, or can be correspondingly provided at the side surface of the electrode assembly 12, or can be simultaneously provided at the bottom and side surfaces of the electrode assembly 12.

The protective plate 20 can have various sizes or shapes, and its shape can be adapted to the shape of the corresponding surface on the electrode assembly 12. For example, if the electrode assembly 12 is a cylindrical structure, the protective plate 20 can be a circular structure and provided corresponding to the circular surface of the electrode assembly 12. If the electrode assembly 12 is a cuboid structure, the protective plate 20 can be a square structure and provided corresponding to one of the surfaces of the electrode assembly 12.

There are also multiple options for the material of the protective plate 20. Generally, the protective plate 20 is prone to wear and tear against the shell 11, resulting in the flakes. If the protective plate 20 includes conductive materials, the generated flakes can easily cause internal short circuit in the battery cell 10. Therefore, in some embodiments, the protective plate 20 includes insulating materials. For example, the protective plate 20 may include, but is not limited to, insulating plastic materials such as polypropylene (PP), polycarbonate (PC), meltable polytetrafluoroethylene (PFA) and polyester resin (PET).

In the preparation process of the battery cell 10, the insulation film 13 is usually first fused and fixed with the protective plate 20, and then the insulation film 13 is wrapped on the electrode assembly 12. Then, the electrode assembly 12, the insulation film 13, and the protective plate 20 are installed together inside the shell 11 to complete the operation of entering the shell. In this process, the protective plate 20 easily detaches from the insulation film 13, and due to its usually colorless and transparent structure, the protective plate is ignored easily. Therefore, a situation that the protective plate 20 is not installed together with the electrode assembly 12 into the shell arises easily, which affects the yield and safety of the battery cell 10.

As for this issue, the embodiments of the present application provide additionally a heat absorbing structure 21 on the protective plate 20. Compared to other materials of the protective plate 20, the heat absorbing structure 21 absorbs external heat more easily. In the installation process of the protective plate 20 and the insulation film 13, the manner of fusion and connection can be used to improve the connection reliability between the protective plate 20 and the insulation film 13, and reduce the risk of separation between the protective plate 20 and the insulation film 13.

Specifically, the fusion and connection mentioned in the embodiments of the present application refers to joining the plastic together by heating. Heating manner includes, but are not limited to, using lasers or other heating sources for heating. Due to the existence of the heat absorbing structure 21, during heating, the heat absorbing structure 21 can help the protective plate 20 to absorb more heat, thereby improving the connection strength between the protective plate 20 and the insulation film 13, and reducing the risk of separation between the insulation film 13 and the protective plate 20.

The specific structure or characteristics of the heat absorbing structure 21 are not limited by the embodiments of the present application. For example, the heat absorbing structure 21 may include a heat absorbing material with a strong heat absorbing rate, or the surface color of the heat absorbing structure 21 may differ from the color of the protective plate 20 at other position, thereby helping the heat absorbing structure 21 to absorb more heat.

The shape of the heat absorbing structure 21 is not limited in the embodiments of the present application. For example, the heat absorbing structure 21 can be square, circular, arc-shaped, or irregularly shaped. And there is no limitation on the size of the heat absorbing structure 21 in the embodiments of the present application. For example, the area of the heat absorbing structure 21 is greater than 1mm². Of course, in some embodiments, the protective plate 20 as a whole may be a heat absorbing structure 21, in other words, every portion of the protective plate 20 has strong heat absorption ability.

The specific material composition of the heat absorbing structure 21 is not limited by the embodiments of the present application. For example, the heat absorbing structure 21 may include at least one of polypropylene (PP), acrylonitrile butadiene styrene (ABS), polycarbonate (PC), polystyrene (PS), polyurethane (PU), calcium carbonate, or silicon dioxide.

In the embodiments of the present application, by providing a heat absorbing structure 21 on the protective plate 20, a stronger connection strength is achieved between the protective plate 20 and the insulation film 13 in the preparation process of the battery cell 10, thereby reducing the probability of detachment between the protective plate 20 and the insulation film 13, increasing the probability of installing the protective plate 20 and the electrode assembly 13 together into the shell, and helping to improve the production yield rate of the battery cell 10.

In some embodiments, please refer to Figs. 4 to 6, where the protective plate 20 includes a plate body 22 and a heat absorbing structure 21 connected to the plate body 22.

The plate body 22 is the main component of the protective plate 20. During the use of the battery cell 10, the plate body 22 plays a major protective role on the electrode assembly 12. For example, the contour shape of the plate body 22 can be adapted to the shape of the corresponding surface of the electrode assembly 12, thereby helping the plate body 22 to better protect the electrode assembly 12.

The material of the plate body 22 is not limited in the embodiments of the present application. For example, the plate body 22 may include an insulating material including, but not limited to, plastic material such as polypropylene (PP), polycarbonate (PC), fusible polytetrafluoroethylene (PFA) and polyester resin (PET).

The heat absorbing structure 21 is provided on the plate body 22, and the specific positional relationship of the heat absorbing structure 21 relative to the plate body 22 is not limited by the embodiments of the present application. For example, the heat absorbing structure 21 can be provided on one side of the plate body 22 in the thickness direction Z, or the heat absorbing structure 21 can also be provided on both sides of the plate body 22 in the thickness direction Z, or the heat absorbing structure 21 can be at least partially embedded inside the plate body 22.

The connection manner between the heat absorbing structure 21 and the plate body 22 is not limited by the embodiments of the present application. For example, the heat absorbing structure 21 can be fixed to the plate body 22 by welding, bonding, graffiti, and injection molding.

In the embodiments of the present application, the plate body 22 is the main part of the protective plate 20 that protects the electrode assembly 12. The heat absorbing structure 21 is provided on the plate body 22, and the presence of the heat absorbing structure 21 can reduce the risk of separation between the plate body 22 and the insulation film 13, improve the reliability of the relative position between the plate body 22 and the electrode assembly 12, and thus enable the plate body 22 to better protect the electrode assembly 12.

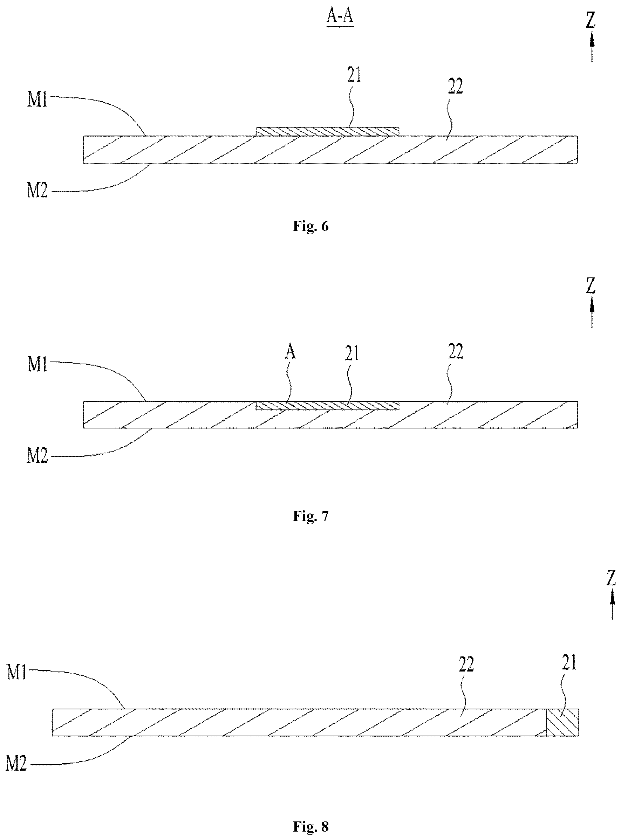

In some embodiments, as shown in Figs. 4 and 6, the heat absorbing structure 21 is provided on at least one side of the plate body 22 along its own thickness direction Z.

The heat absorbing structure 21 can be provided on a side of the plate body 22 near the electrode assembly 12, or on a side of the plate body 22 away from the electrode assembly 12. If the heat absorbing structure 21 is located on the side of the plate body 22 near the electrode assembly 12, the heat absorbing structure 21 can directly contact the insulation film 13. Therefore, in the preparation process of the battery cell 10, some of the heat absorbed by the heat absorbing structure 21 can be directly transferred to the insulation film 13, thereby helping the insulation film 13 to absorb heat and deform, and thus improving the connection reliability between the protective plate 20 and the insulation film 13.

If the heat absorbing structure 21 is located on the side of the plate body 22 away from the electrode assembly 12, the heat absorbing structure 21 can be closer to the heating source, thereby helping the heat absorbing structure 21 to absorb more heat from the heating source, and thus improving the connection reliability between the protective plate 20 and the insulation film 13.

In summary, by providing the heat absorbing structure 21 on at least one side of the plate body 22 in the thickness direction Z, the embodiments of the present application can improve the connection reliability between the protective plate 20 and the insulation film 13, reduce the probability that the protective plate 20 and the electrode assembly 12 separate from each other and thus are unable to enter the shell simultaneously, and improve the production yield rate of the battery cell 10.

In some embodiments, please refer to Figs 4, 5, and 7. The plate body 22 comprises a first surface M1 and a second surface M2 opposite to each other along the thickness direction Z. The plate body 22 is provided with a recess portion A recessed relative to the first surface M1, and the heat absorbing structure 21 is at least partially accommodated within the recess portion A.

The first surface M1 and the second surface M2 are the two opposite surfaces of the plate body 22 in the thickness direction Z, with one of the first surface M1 and the second surface M2 facing towards the electrode assembly 12 and the other facing away from the electrode assembly 12. The first surface M1 and the second surface M2 can be planar structures or have certain undulations, which are not limited by the embodiments of the present application.

The plate body 22 is provided with a recess portion A which is formed by the first surface M1 being recessed toward the second surface M2. The size and shape of the recess portion A can have multiple forms. For example, the recess portion A can be a circular groove, a square groove, or other irregularly shaped grooves.

The recess portion A is configured to accommodate at least a portion of the heat absorbing structure 21, and the number of the recess portion A depends on the number of the heat absorbing structure 21. In other words, the number of the recess portion A can be one or multiple. The size of the recess portion A in the thickness direction Z is not limited in the embodiments of the present application. For example, the size of the recess portion A in the thickness direction Z is not greater than half of the thickness of the plate body. This can ensure the existence of the recess portion A while ensuring the structural strength of the plate body at the recess portion A, reducing the risk of fracture and deformation of the plate body at the recess portion A.

In the embodiments of the present application, by providing a recess portion A on the plate body 22, the heat absorbing structure 21 can be at least partially located within the recess portion A of the plate body. This design can reduce the protrusion height of the heat absorbing structure 21 relative to the plate body 22, reduce the possibility of unevenness on the surface of the protective plate 20 caused by the presence of the heat absorbing structure 21, improve the surface flatness of the protective plate 20, and help to improve the bonding effect between the protective plate 20 and the insulation film 13 or between the protective plate 20 and the shell 11.

In some embodiments, the surface of the heat absorbing structure 21 away from the bottom surface of the recess portion A is flush with the first surface M1. The "bottom surface of the recess portion A" mentioned in the embodiments of the present application refers to the end surface of the recess portion A in the thickness direction Z, where the bottom surface of the recess portion A can be parallel to the first surface M1 or tilted relative to the first surface M1.

The first surface M1 can be a planar structure, which can be parallel to the second surface M2 or tilted relative to the second surface M2. At the same time, the surface of the heat absorbing structure 21 can be flush with the first surface M1, in other words, the heat absorbing structure 21 is completely embedded in the plate body 22, and the heat absorbing structure 21 will not protrude relative to the plate body 22.

This design further improves the surface flatness of the protective plate 20, and thus helps to improve the bonding effect between the protective plate 20 and the shell 11 or between the protective plate 20 and the insulation film 13, thereby improving the reliability of the relative position between the protective plate 20 and the electrode assembly 12, and enabling the protective plate 20 to better protect the electrode assembly 12.

In some embodiments, with reference to Figs. 4 and 8, two surfaces of the heat absorbing structure 21 in the thickness direction Z are both exposed relative to the plate body 22. In other words, the heat absorbing structure 21 is exposed relative to both the first surface M1 and the second surface M2.

The term "exposed" mentioned in the embodiments of the present application refers to at least a portion of the structure in the heat absorbing structure 21 will not be obstructed by the first surface M1 and the second surface M2, and two surfaces of the heat absorbing structure 21 in the thickness direction Z can both come into contact with the external environment.

The specific position of the heat absorbing structure 21 relative to the plate body 22 is not limited by the embodiments of the present application. For example, the heat absorbing structure 21 can be located at the edge position of the plate body 22, and at this time, the heat absorbing structure 21 can be directly fixed at the edge position of the plate body 22 by welding or other means. Alternatively, the heat absorbing structure 21 can also be located at a certain position in the center of the plate body 22.

One surface of the heat absorbing structure 21 in the thickness direction Z can directly contact the insulation film 13. In the preparation process of the battery cell 10, some of the heat absorbed by the heat absorbing structure 21 can be directly transferred to the insulation film 13, so as to help the insulation film 13 to absorb heat and deform, thereby improving the connection reliability between the protective plate 20 and the insulation film 13.

Another surface of the heat absorbing structure 21 in the thickness direction can be closer to the heating source when the protective plate 20 is fused and connected with the insulation film 13, so as to help the heat absorbing structure 21 to absorb more heat from the heating source, thereby improving the connection reliability between the protective plate 20 and the insulation film 13.

In summary, the embodiments of the present application improve the connection reliability between the protective plate 20 and the insulation film 13 by exposing two surfaces of the heat absorbing structure 21 in the thickness direction Z, further reducing the risk of the protective plate 20 not being installed together with the electrode assembly 12 into the shell, and improving the yield rate of the battery cell 10.

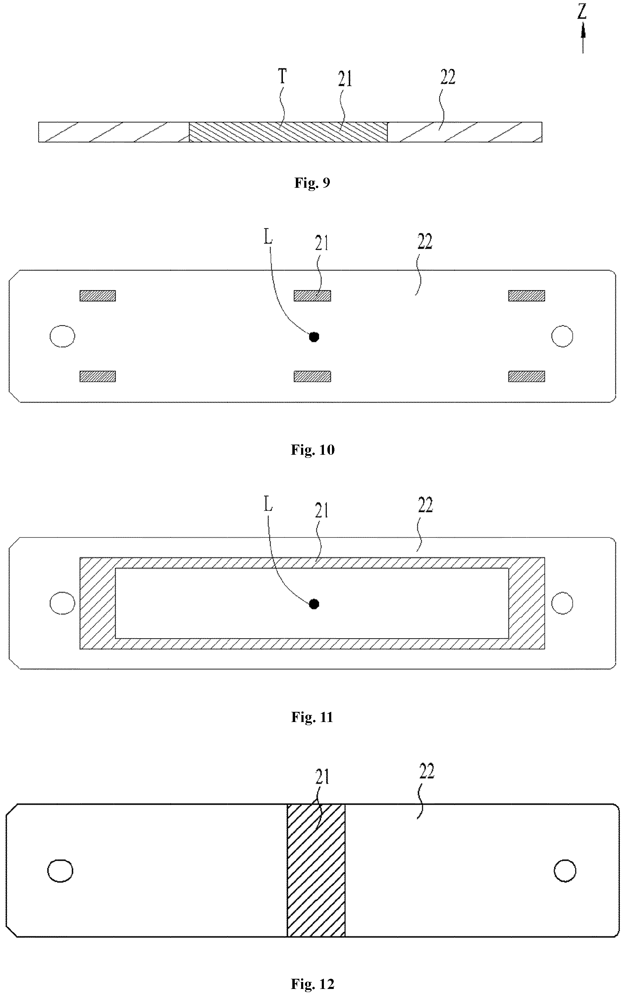

In some embodiments, please refer to Figs. 4 and 9. The plate body is provided with a through hole T that penetrates along the thickness direction Z, and the heat absorbing structure 21 is at least partially accommodated within the through hole T.

The through hole T penetrates through the plate body along the thickness direction Z. During the preparation of the plate body, the through hole T can be formed by drilling and removing. The size and the shape of the through hole T is not limited in the embodiments of the present application. For example, the through hole T can be a circular hole structure, a square hole structure, or other irregular hole structures. In addition, the number of the through hole T can be one or multiple. When the number of through holes T is multiple, multiple through holes T are provided at intervals on the plate body.

In the embodiments of the present application, by providing a through hole T on the plate body and embedding the heat absorbing structure 21 into the through hole T, two surfaces of the heat absorbing structure 21 in the thickness direction Z can both be exposed. The structure is simple and reliable, which is conducive to improving the connection reliability between the protective plate 20 and the insulation film 13, and improving the yield rate of the battery cell 10.

In some embodiments, please refer to Figs. 4 and 10. The number of the heat absorbing structure 21 is multiple, and multiple heat absorbing structures 21 are distributed at intervals on the plate body.

The number of the heat absorbing structure 21 is set to be multiple, and multiple heat absorbing structures 21 can improve the connection strength between the protective plate 20 and the insulation film 13 at different positions. The arrangement of multiple heat absorbing structures 21 is not limited by the embodiments of the present application. For example, multiple heat absorbing structures 21 can be arranged side by side in a single direction, or multiple heat absorbing structures 21 can be arranged in an array along multiple directions.

In addition, the size and the shape of different heat absorbing structures 21 can be the same or different, and the distance between adjacent heat absorbing structures 21 can be consistent or different. For example, the projection of each heat absorbing structure 21 in the thickness direction Z is a square structure, and the size of each heat absorbing structure 21 is consistent, and the distance between adjacent heat absorbing structures 21 also maintains consistent.

In the embodiments of the present application, multiple heat absorbing structures 21 are distributed at intervals on the plate body, so that the protective plate 20 is provided with the heat absorbing structures 21 at different positions. Therefore, when the protective plate 20 is fused and connected with the insulation film 13, the connection strength between the protective plate 20 and the insulation film 13 at different positions can be improved, thereby ensuring that the protective plate 20 can enter the shell simultaneously with the electrode assembly 12 and improving the preparation yield of the battery cell 10.

In some embodiments, please refer to Figs. 4 and 11. The heat absorbing structure 21 surround to form a circular structure.

In the process of the fusion and connection between the protective plate 20 and the insulation film 13, the heating source usually performs the fusion and connection along a specific path on the protective plate 20 or for multiple specific sites on the protective plate 20. In order to ensure the connection strength between the protective plate 20 and the insulation film 13, the fusion path or the fusion points are usually distributed at different positions on the protective plate 20.

Based on this, the embodiments of the present application focus on the heating path of the heating source on the protective plate 20, and provide the heat absorbing structure 21 as a circular structure, so that the heating position of the heating source on the protective plate 20 can accurately fall on the heat absorbing structure 21, which is conducive to more heat absorption of the heat absorbing structure 21, thereby improving the connection strength between the protective plate 20 and the insulation film 13, and improving the preparation yield of the battery cell 10.

In some embodiments, the heat absorbing structure 21 is symmetrically distributed relative to the central axis L of the plate body. The central axis L of the plate body mentioned in the embodiments of the present application refers to an axis parallel to the thickness direction and passing through the center of the plate body.

In the embodiments of the present application, the number of heat absorbing structure 21 can be one or multiple. When the heat absorbing structures 21 are multiple, multiple heat absorbing structures 21 are distributed on the circumferential side of the central axis L and distributed rotationally and symmetrically relative to the central axis L.

In the embodiments of the present application, by symmetrically distributing the heat absorbing structure 21 relative to the central axis L, when the protective plate 20 is fused and connected with the insulation film 13, the heat can evenly diffuse to different positions of the protective plate 20, thereby improving the connection strength between the protective plate 20 and the insulation film 13 at the different edge positions, and improving the preparation yield of the battery cell 10.

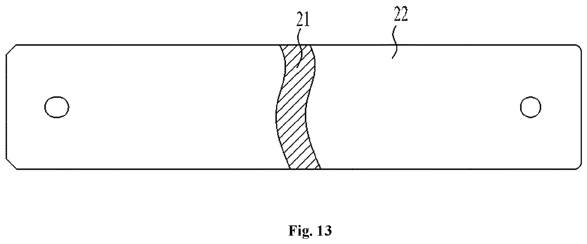

In some embodiments, please refer to Figs. 12 and 13. The heat absorbing structure 21 can also be a strip structure, and the strip structure is provided across the plate body 22.

The strip structure can be a straight strip structure, or other strip forms such as curve or broken line. The "across" mentioned in the embodiments of the present application refers to the strip structure being able to completely pass through the plate body 22 in a specific direction. For example, the strip structure can be provided across the plate body along the width direction of the plate body 22.

This design can enable the heat absorbing structure 21 to be simultaneously located in multiple different areas of the plate body 22, thereby improving the connection strength between the protective plate 20 with the insulation film 13 at different positions when the protective plate 20 is fused and connected with the insulation film 13, and further reducing the risk of the protective plate detaching from the insulation film.

In some embodiments, the color of the heat absorbing structure 21 is different from the color of the plate body 22.

The color of the heat absorbing structure 21 can be adjusted in various ways. For example, the color of certain materials inside the heat absorbing structure 21 is different from that of the plate body 22, so that the color of the heat absorbing structure 21 is different from that of the plate body 21. For example, when the heat absorbing structure 21 is yellow, it can include at least one of cadmium yellow, iron yellow, lead chromium yellow, or benzidine yellow. When the heat absorbing structure 21 is blue, it can include at least one of iron blue, ultramarine blue, or phthalocyanine.

In some other embodiments, the surface color of the heat absorbing structure 21 can also be changed by process manner such as graffiti or injection molding to make it different from the color of the plate body 22.

The heat absorption rate of the heat absorbing structure 21 is not only affected by material factors, but also by its own surface color. In view of this, the embodiments of the present application adjust the color of the heat absorbing structure 21 to make the material of the heat absorbing structure 21 different from the material of the plate body 22, so as to help to absorb more heat when the protective plate 20 is fused and connected with the insulation film 13, thereby improving the connection strength between the protective plate 20 and the insulation film 13.

In some embodiments, the color of the heat absorbing structure 21 is darker than the color of the plate body 22.

For the color, the color typically has multiple attributes, such as hue, saturation, and brightness. For different colors, the colors are usually dark or light, some colors are relatively darker, and their ability to absorb heat is relatively stronger; some colors are relatively lighter, and their ability to absorb heat is relatively weak.

The embodiments of the present application do not impose specific restrictions on the division of dark color and light color. For example, different colors have corresponding RGB values, namely corresponding red brightness value R, corresponding green brightness value G, and corresponding blue brightness value B. Then, by the formula g=R * 0.299+G * 0.587+B * 0.114, the corresponding g values for different colors are obtained. Generally, the smaller the g value is, the darker the color is, and the larger the g value is, the lighter the color is. The RGB value of the color can be measured using specific instruments such as colorimeters or spectrophotometers.

In the embodiments of the present application, the color of the heat absorbing structure 21 is set to be darker than the color of the plate body 22, so as to help the heat absorbing structure 21 to absorb more heat when the protective plate 20 is fused and connected with the insulation film 13, thereby improving the connection strength between the protective plate 20 and the insulation film 13 and reducing the possibility of separation between the protective plate 20 and the insulation film 13. Meanwhile the existence of the heat absorbing structure 21 can also play a certain identification role. For example, if the protective plate 20 is detached from the insulation film 13, due to the dark color of the heat absorbing structure 21 itself, the human eyes can easily observe the separation of the protective plate 20 from the insulation film 13 through the heat absorbing structure 21, which plays a certain role of reminder.

In some embodiments, the color of the heat absorbing structure 21 includes at least one of yellow, blue, or black.

Compared to other colors, the color such as yellow is more vibrant, has a stronger ability to absorb heat, and is more easily observed by the human eyes or certain instruments. In view of this, in the preparation process of the battery cell 10, certain instruments can be configured to detect the heat absorbing structure 21, so as to more accurately determine whether the protective plate 20 is installed together with the electrode assembly 12 inside the shell 11, which helps to improve the production yield of the battery cell 10.

In some embodiments, the light absorbance of the heat absorbing structure 21 is greater than that of the plate body 22.

From the above content, it can be seen that when the protective plate 20 can be fused and connected with the insulation film 13 by laser, the heat absorption ability of the heat absorbing structure 21 is often positively correlated with its light absorption ability in the laser fusion and connection process. In other words, the stronger the light absorption ability of the heat absorbing structure 21 is, the stronger the heat absorption ability of the heat absorbing structure 21 is. Specifically, the higher the light absorbance of the heat absorbing structure 21 is, the stronger its ability to absorb laser is, which is more conducive to improving the connection strength between the protective plate 20 and the insulation film 13.

Therefore, the embodiments of the present application adjust the material or color parameters of the heat absorbing structure 21 to make the light absorbance of the heat absorbing structure 21 greater than that of the plate body 22, thereby helping to improve the heat absorbing ability of the heat absorbing structure 21, thus improving the connection strength between the protective plate 20 and the insulation film 13, and improving the production yield of the battery cell 10.

In a second aspect, as shown in Figs. 4 and 5, the embodiments of the present application provide a battery cell 10 including a shell 11, an electrode assembly 12, an insulating film 13, and the protective plate 20 in any of the aforementioned embodiments. The electrode assembly 12 is accommodated within the shell 11, the insulating film 13 covers at least a portion of the electrode assembly 12, and the protective plate 20 is connected to the insulating film 13.

The heat absorbing structure 21 provided on the protective plate 20 can improve the fusion and connection strength between the protective plate 20 and the insulation film 13, reduce the risk of separation between the protective plate 20 and the insulation film 13, and ensure that the electrode assembly 12 and the protective plate 20 are installed together inside the shell 11, which helps to improve the yield rate and safety of the battery cell 10.

It should be noted that the battery cell 10 provided in the embodiments of the present application has the beneficial effect of the protective plate 20 in any of the aforementioned embodiments. Please refer to the description of the beneficial effect of the protective plate 20 in the aforementioned embodiments for specific details, which will not be further elaborated in the embodiments of the present application.

In some embodiments, the protective plate 20 is provided on a side of the insulation film 13 away from the electrode assembly 12.

The insulating film 13 covers at least a portion of the structure of the electrode assembly 12, and an insulating material is provided inside the insulating film 13 to insulate and isolate the electrode assembly 12 from the shell 11. The protective plate 20 is provided on the side of the insulation film 13 away from the electrode assembly 12. The protective plate 20 is mainly used to protect the electrode assembly 12 and reduce the risk of damage to the electrode assembly 12 due to contact with the shell 11.

In the embodiments of the present application, by providing the protective plate 20 on the side of the insulation film 13 away from the electrode assembly 12, the insulation film 13 can provide insulation effect on the electrode assembly 12. At the same time, the protective plate 20 can reduce the risk of contact and collision between the electrode assembly 12 and the shell 11, thereby improving the safety of the use of the battery cell 10.

In some embodiments, the protective plate 20 includes a plate body 22, and the heat absorbing structure 21 is provided on a side of the plate body 22 away from the insulation film 13.

In the fusion and connection process between the insulation film 13 and the protective plate 20, the side of the protective plate 20 away from the insulation film 13 is usually heated by a heating source, and the connection between the insulation film 13 and the protective plate 20 is achieved by increasing the temperature. Based on this, the embodiments of the present application provide the heat absorbing structure 21 on the side of the plate body 22 away from the insulation film 13, so that the heat absorbing structure 21 can be closer to the heating source, thereby helping the heat absorbing structure 21 to absorb more heat so as to better realize the connection between the protective plate 20 and the insulation film 13, ensuring the connection strength between the protective plate 20 and the insulation film 13, reducing the risk of the protective plate 20 detaching from the electrode assembly 12, and improving the safety of the use of the battery cell 10.

In a third aspect, the embodiments of the present application provide a battery including the battery cell 10 of any of the aforementioned embodiments.

It should be noted that the battery provided in the embodiments of the present application has the beneficial effect of the battery cell 10 in any of the aforementioned embodiments. For specific details, please refer to the description of the beneficial effect of the battery cell 10. The embodiments of the present application will not repeat it here.

In a fourth aspect, the embodiments of the present application provide an electricity consuming apparatus including the battery cell 10 for providing electrical energy in any of the aforementioned embodiments.

According to some embodiments of the present application, please refer to Figs. 4, 5, and 6. The battery cell 10 includes a shell 11 and an electrode assembly 12 accommodated within the shell 11, an insulating film 13, and a protective plate 20. The insulating film 13 covers at least a portion of the electrode assembly 12, and the protective plate 20 is connected to the insulating film 13. The protective plate 20 includes a plate body 22 and a heat absorbing structure 21 connected to the plate body 22. The heat absorbing structure 21 is provided on the side of the plate body 22 along its own thickness direction Z, and the heat absorbing structure 21 is provided on the side of the plate body 22 away from the insulation film 13.

Finally, it should be noted that the above embodiments are only used to illustrate the technical solutions of the present application and not to limit it; Although detailed explanations have been provided for the present application with reference to the aforementioned embodiments, those skilled in the art should understand that they can still modify the technical solutions recorded in the aforementioned embodiments, or equivalently replace some or all of their technical features; And these modifications or replacements do not make the essence of the corresponding technical solutions separate from the scope of the technical solutions in each embodiment of the present application, and they should all be covered within the scope of the claims and specifications of the present application. Especially, as long as there is no structural conflict, the various technical features mentioned in each embodiment can be combined in any way. The present application is not limited to specific embodiments disclosed herein, but includes all technical solutions falling within the scope of the claims.

## Claims

1. A protective plate for a battery cell, wherein the protective plate is provided with a heat absorbing structure, and at least a portion of the heat absorbing structure is configured to be fused and connected with an insulating film of the battery cell for covering an electrode assembly.

2. The protective plate according to claim 1, comprising a plate body and the heat absorbing structure connected to the plate body.

3. The protective plate according to claim 2, wherein the heat absorbing structure is provided on at least one side of the plate body along its own thickness direction.

4. The protective plate according to claim 2 or 3, wherein the plate body comprises a first surface and a second surface opposite to each other along the thickness direction; and
the plate body is provided with a recess portion recessed relative to the first surface, and at least a portion of the heat absorbing structure is accommodated within the recess portion.

5. The protective plate according to claim 4, wherein a surface of the heat absorbing structure away from a bottom surface of the recess portion is flush with the first surface.

6. The protective plate according to claim 2, wherein two surfaces of the heat absorbing structure in the thickness direction are exposed relative to the plate body.

7. The protective plate according to claim 6, wherein the plate body is provided with a through hole penetrating along the thickness direction, and the heat absorbing structure is at least partially accommodated within the through hole.

8. The protective plate according to any one of claims 2-7, wherein a plurality of the heat absorbing structures are provided and distributed at intervals on the plate body.

9. The protective plate according to any one of claims 2-7, wherein the heat absorbing structure surrounds to form a circular structure.

10. The protective plate according to claim 8 or 9, wherein the heat absorbing structure is symmetrically distributed relative to a central axis of the plate body.

11. The protective plate according to any one of claims 2-10, wherein a color of the heat absorbing structure is different from a color of the plate body.

12. The protective plate according to claim 11, wherein the color of the heat absorbing structure is darker than the color of the plate body.

13. The protective plate according to claim 12, wherein the color of the heat absorbing structure comprises at least one of yellow, blue, or black.

14. The protective plate according to any one of claims 2-13, wherein a light absorbance of the heat absorbing structure is greater than a light absorbance of the plate body.

15. The protective plate according to any one of claims 1 to 14, wherein the heat absorbing structure comprises at least one of polypropylene, acrylonitrile butadiene styrene, polycarbonate, polystyrene, polyurethane, calcium carbonate, or silica.

16. A battery cell comprising:
a shell;
an electrode assembly accommodated within the shell;
an insulation film for covering at least a portion of the electrode assembly;
the protective plate as claimed in any one of claims 1 to 15, wherein the protective plate is connected to the insulating film.

17. The battery cell according to claim 16, wherein the protective plate is provided on a side of the insulation film away from the electrode assembly.

18. The battery cell according to claim 16 or 17, wherein the protective plate comprises a plate body, and the heat absorbing structure is provided on a side of the plate body away from the insulation film.

19. A battery comprising the battery cell according to any one of claims 16 to 18.

20. An electricity consuming apparatus comprising the battery cell for providing electrical energy according to any one of claims 16 to 18.
